# EUROPÄISCHE PATENTSCHRIFT

(11) **EP 1 992 230 B1**
(45) Veröffentlichungstag und Bekanntmachung des Hinweises auf die Patenterteilung: **03.07.2013**
(21) Anmeldenummer: 08007234.1
(22) Anmeldetag: 11.04.2008
(51) Int. Cl.: A01N 55/00, A01P 1/00, D06M 15/03

(54) **Verwendung eines antibakteriell wirksamen Mittels**
Use of an antibacterial agent
Utilisation d'un produit antibactérien

(30) Priorität: 11.04.2007 DE 102007017303
(43) Veröffentlichungstag der Anmeldung: 19.11.2008
(73) Patentinhaber: NANO-X GmbH, 66130 Saarbrücken (DE); NanoCraft GbR, 78234 Engen (DE); Johann Borgers GmbH & Co. KG, 46397 Bocholt (DE); Institut für Textil- und Verfahrenstechnik der Deutschen Institute für Textil- und Faserforschung Denkendorf, 73770 Denkendorf (DE)
(72) Erfinder: Laryea, Nora, Dr., 66113 Saarbrücken (DE); Von Armin, Volkmar, Dr., 73230 Kirchheim (DE); Scherrieble, Andreas, 72762 Reutlingen (DE); Stegmaier, Thomas, Dr., 73277 Owen (DE); Mehmen, Knut, 47166 Duisburg (DE); Sepeur, Stefan, Dr., 66787 Wadgassen (DE); Akari, Sabri, Dr., 78250 Tengen Ortsteil Büsslingen (DE); Sartor, Simon, 33813 Oerlinghausen (DE)
(74) Vertreter: Vièl, Christof

(56) Entgegenhaltungen:
- WO-A1-02/42557
- DE-A1-102004 014 483
- JP-A- 2001 348 484
- KNITTEL D ET AL: "SURFACE OF TEXTILES AND THE HUMAN SKIN 1. SURFACE MODIFICATION OF FIBERS AS THERAPEUTIC AND DIAGNOSTIC SYSTEMS" EXOGENOUS DERMATOLOGY: PHYSICAL-CHEMICAL-BIOLOGICAL, KARGER, CH, Bd. 2, Nr. 1, 1. Januar 2003 (2003-01-01), Seiten 11-16, XP009041824 ISSN: 1424-4616

## Beschreibung

Die Erfindung betrifft die Verwendung eines antibakteriell wirksamen Mittels.

Die Verwendung von Chitosan und verschiedensten Derivaten zur Herstellung von Fasern, Garnen, Gewirken und zur Herstellung textiler Flächengebilde ist aus der EP 1 243 688 A1 bekannt.

Weiterhin wird in der KR 1020040026300 A und der US 2006/017199 A1 der Zusatz von Chitosan beispielsweise in Polyurethanharze bzw. organische Polymeremulsionen, die als waschpermanente, antibakteriell wirkende Imprägnierungen eingesetzt werden, beschrieben.

Aus der DE 197 03 362 A1 ist eine Kombination von organischen Polymeren und Chitosan für die nachträgliche Ausrüstung von Textilien bzw. Fasern im Gemisch mit Tensiden für einen besseren Weichgriff bekannt. Über die Permanenz dieser nachträglichen Ausrüstung werden keine Aussagen gemacht.

Die DE 600 02 681 T2 beschreibt die Ausrüstung von Textilien und Fasern mittels eines Mehr-Stufenprozesses, wobei in einer ersten Stufe eine Chitosan-Lösung und in einer zweiten Stufe eine Silbersalzlösung aufgetragen werden, in einer dritten Stufe die Reduktion der Silbersalzlösung zu Silber und in einer vierten Stufe die Trocknung erfolgt. Dieses Verfahren führt zwar zu einer Waschpermanenz der Ausrüstung, ist jedoch sehr aufwendig.

Weiterhin ist aus der WO 02/077358 A1 der Einsatz von Nanochitosan bekannt, welches durch Sprühtrocknung von Chitosanlösungen hergestellt wird. Die Einlagerung der Partikel an die Faser erfolgt hierbei ohne chemische Anbindung, dennoch wird eine gute Waschpermanenz beschrieben.

Die DE 698 34 429 T2 beschreibt den Auftrag eines Chitin- oder Chitosan-Films auf ein hydrophobes Substrat, welches eine höhere antimikrobielle Aktivität aufweist als der reine Wirkstoff. Als Substrat werden z.B. Polypropylen oder zusätzliche hydrophobierende Substrate verwendet. Auch hier erfolgt keine chemische Anbindung von Chitosan auf der Substratoberfläche. Die Reduktion der Abwaschbarkeit wird über die Molmasse der Chitosane definiert. Als Chitosanderivate, bzw. als Vernetzungsmittel für Chitosan werden Verbindungen mit Carboxyl-, Carbonsäure-, Amino- oder Hydroxyl-Gruppen beschrieben (Diamine, Polyamine, Diole, Polyole, Polycarbonsäuren, Polyoxide). Es werden rein organische Verntzungsagenzien oder Metallsalze als Komplexbildner verwendet.

Der Einsatz von Chitosan-Derivaten mit anorganisch-organischen Matrices ist bisher beschränkt auf den Bereich medizinischer Implantate bzw. medizinischer Wirkstoffe, wobei anorganische Partikel als Trägerstoffe verwendet werden.

Die WO 02/42557 A1 beschreibt ein Festigungs- und/oder Stabilisierungsmittel für organisches Material, das ein silyliertes Derivat einer Hydroxyl-, Carbonyl- oder Aminogruppen enthaltenden Verbindung in einem unpolaren Lösungsmittel enthält und u.a. zur Konservierung und Restaurierung von Papier, Holz, Textilien, Farben und Tinten eingesetzt werden kann.

Aus der DE 10 2004 014 483 A1 ist eine antimikrobielle Beschichtungszusammensetzung bekannt, die eine poröse anorganische Oxidschicht und mindestens ein kationisches Polysaccharid umfaßt, das in der anorganischen Oxidschicht in homogener Verteilung enthalten ist.

Aufgabe der vorliegenden Erfindung ist es, ein Verfahren zu schaffen, mit dem Substrate, insbesondere Fasern und Textilien, permanent antibakteriell ausgerüstet werden können.

Diese Aufgabe wird erfindungsgemäß bei einem antibakteriell wirksamen Mittel dadurch gelöst, daß das Mittel aus einem mit Silylgruppen modifizierten Naturstoff besteht, wobei der Naturstoff ein Biopolymer ist, das funktionelle Gruppen enthält, die zu 5-95% mit korrespondierenden organischen funktionellen Gruppen von Organosilanen umgesetzt sind und dadurch teilweise Silylgruppen aufweisen und die Organosilane mit dem Naturstoff über eine organische Seitenkette kovalent gebunden sind, wobei dieses Mittel über den Sol-Gel-Prozeß oder durch direkte Siloxanhärtung in eine beschichtungsfähige Form überführt ist und nach Beschichtung und Härtung durch Siloxanbrücken an ein Substrat angebunden ist. Auf diese Weise werden schmutzabweisende und antibakteriell wirkende anorganischorganische Modifizierungen von Biopolymeren geschaffen, die zur permanenten Ausrüstung von Substraten, insbesondere von Fasern und Textilien, geeignet sind. Unter antibakterieller Ausrüstung wird hierbei eine solche verstanden, die antibakterielle und/oder antivirale und/oder antiparasitäre und/oder antimykotische Eigenschaften aufweist.

In diesem Zusammenhang ist vorgesehen, daß die Silylgruppen mono-, di- oder trifunktionelle Silylgruppen sind.

Weiterhin ist es sinnvoll, daß der Naturstoff oder der modifizierte Naturstoff ausgewählt ist aus der Gruppe bestehend aus Chitinderivaten, anionisch, nicht ionisch oder kationisch derivatisierten Chitosanen, insbesondere Carboxylierungs-, Succinylierungs-, Alkoxylierungs - oder Quaternierungsprodukte, Carboxymethylchitin (Chitosan), Chitosansalzen, Xylanen bzw. Xylanderivaten, Propolis und deren Wirkstoffen.

Zur Erfindung ist weiterhin gehörig, daß die funktionellen Gruppen ausgewählt sind aus der Gruppe bestehend aus -NH₂, -OH, -OR, -R-X (X: Halogenidrest), R-SH, R-SO₃ und R-SH, R-COOH und R-COOR.

Erfindungsgemäß ist auch, daß die Organosilane mit korrespondierenden organischen funktionellen Gruppen ausgewählt sind aus der Gruppe bestehend aus 3-Aminopropyltriethoxysilan, Aminoethylaminpropyltrimethoxysilan, Aminoethyl-aminopropyltrimethoxysilan, Aminoethylaminopropylsilan, 3-Aminopropyl-trimethoxysilan, N-(2-Aminoethyl)-3-aminopropyltrimethoxysilan, N-(2-Aminoethyl)-3-aminopropylmethyl-dimethoxysilan, N-(2-Aminoethyl)-3-aminopropylmethyl-dimethoxysilan, N-Cyclohexyl-3-aminopro-pyl-trimethoxysilan, Benzylaminoethyl-aminopropyltrimethoxysilan, Vinylbenzylamino-ethylaminopropyltrimethoxysilan, Vinyltrimethoxysilan, Vinyltriethoxysilan, Vinyldimethoxymethylsilan, Vinyl-(tris)methoxyethoxy)silan, Vinylmethoxymethyl-silan, Vinyltris(2-methoxyethoxy)silan, Vinyltriacetoxysilan, Chloropropyltrimethoxysilan, 3-Glycidoxypropyl-trimethoxy-silan, 3-Glycidoxypropyltriethoxysilan, 3-Glycidoxypropylmethyldiethoxysilan, Mercaptopropyl- trimethoxysilan, Bis-Triethoxysilylpropyldisulfidosilan, Bis-Triethoxysilyl-propylisulfidosilan, Bis-Triethoxysilylpropyltetroasulfidosilan, N-Cyclohexyl-aminomethylmethyldieethoxy-silan, N-Cyclohexylaminomethyltriethoxysilan, N-Phenylaminomethyltrimethoxysilan, (Methacryloxymethyl)methyldimethoxysilan, Methacryl-oxymethyltrimethoxysilan, (Methacryloxymethyl)methyldiethoxysilan, Methacryloxymethyl-triethoxysilan, 3-Methacryloxypropyltrimethoxysilan, 3-Methacryloxypropyltrimethoxysilan, 3-Methacrloxypropyltriacetoxysilan, (Iso-cyanatomethyl)methyldimethoxysilan, 3-Isocyanatopropyltrimethoxysilan, 3-Isocyanatopropyltriethoxysilan, 3-Tri-methoxysilylmethyl-O-methylcarbamat, N-Dimethoxy-(methyl)silylmethyl-O-methyl-carbamat, 3-(Triethoxysilyl)-propylbernsteinsäure-anhydrid, 3-Mercaptopropylmethyldimethoxy-silan und Beta-(3, 4-Epoxycyclohexyl)Ethyltriethoxysilan

Es hat sich als vorteilhaft erwiesen, daß der Naturstoff durch Umsetzung mit Lösungsmittel, insbesondere Wasser, Alkohole, Ether, Heterocyclen, Acetate, Alkane oder Aromaten, in eine lösliche Form gebracht ist.

Eine Ausbildung der Erfindung besteht darin, daß bei Verwendung von Chitosan als Naturstoff dieses einen Deacetylierungsgrad von mindestens 40 % aufweist.

Eine Weiterbildung der Erfindung besteht darin, daß das Mittel zusätzlich bis zu 50 Gew.-% antibakteriell wirkende Verbindungen ausgewählt aus der Gruppe bestehend aus metallischen Verbindungen, insbesondere Silberzeolith, Silbersilikat, Silbersulfonat, Silbermetall, Titanoxid, löslichem Glaspulver mit Metallionen, Eisen-Phthalocyanat, Kupfersulfonat und Zink-Pyrithion, quaternisierten Ammoniumsalzen, insbesondere Didecyldimethylammoniumchlorid, Hexadecylpyridiniumchlorid, Cetyldi-methylbenzylammoniumchlorid und Polyoxyalkyltrialkylammoniumchlorid, Tensiden, insbesondere amphoteren Tensiden, bevorzugt Alkyldi(aminoethyl)glycin, nichtionogenen Tensiden, bevorzugt Glycerinstearat, Gruanidinverbindungen, insbesondere 1,1-Hexamethylen-bis-5-(4-chlorphenyl)-biguanid-digluconat und Polyhexa-methylen-biguanidhydrochlorid, Phenolen, insbesondere Biozol, Thymol, Alkylenbisphenol-Natriumsalz, p-Chlor-m-xylenol (PCMX), 5-Chlor-2-(2,4-dichlorphenoxy)-phenol (Triclosan), Anilin (3,4,4-Trichlorcarbanilin), Imidazol (2-(4-Thiazolyl)-benzimidazol und 2-(Thiocyanomethylthio)-benzothiazol (TCMTB), Estern, insbesondere Diethylphthalat und Parabene, Neomycinsulfat und der Komplexierung mit Cyclodextrinen.

Sinnvoll ist auch, daß die mit Silylgruppen modifizierten Naturstoffe durch Katalysatoren wie Lewissäuren oder Lewisbasen vernetzt sind, insbesondere in Form von Übergangsmetallkomplexen, -salzen oder -partikeln, bevorzugt Mikro- oder Nanopartikeln, wobei bevorzugt wird, daß die Übergangsmetallkomplexe, -salze oder -partikel Titan-, Aluminium-, Zinn- oder Zirkoniumkomplexe sind.

Erfindungsgemäß ist weiterhin vorgesehen, daß die Silylgruppen mit Metallkornplexen, Metaflalkoxiden, insbesondere Metallsilikaten von Titan, Zirkonium und Aluminium, Metalloxid-Partikeln oder -Suspensionen über einen Sol-Gel-Prozess umgesetzt sind, wobei die Partikelgröße der Metalloxidpartikel oder-suspensionen zwischen 2 nm bis 1 µm beträgt

Zur Erfindung gehörig ist ebenfalls, daß das Mittel anorganische oder organische Füllstoffe, insbesondere Mikro-, Submikro- oder Nanopartikel, Polvtetrafluorethylenpartikel oder Wachse enthält.

Ebenfalls liegt im Rahmen der Erfindung die Verwendung des erfindungsgemaßen antibakteriell wirksamen Mittels in Silikonen, Sol-Gel-Systemen, organischen Harzen, insbesondere Naturharzen, Alkyden, Urethan, Epoxiden, Phenol, Melamin oder Harzen auf Acrylat-Basis, zum Erreichen von antibakteriellen Eigenschaften.

Das erfindungsgemäße antibakteriell wirksamen Mittel karm entweder als Additiv oder über den Sol-Gel-Prozeß umgesetzt werden (in Lösungsmittel oder ohne Lösungsmittel) und mit Konzentrationen von 0,1 bis 100 % auf ein Substrat aufgetragen werden.

Vorteilhaft ist die Verwendung des erfindungsgemäßen antibakteriell wirksamen Mittels auf Textilien, Fasern oder anderen fasesbasierten Flächen, Kunststoffen, insbesondere Polymeren, Metallen, Naturstoffen, insbesondere Holz, Stroh, Hanf, Sisal, Leder, auf Kunstleder, Glas, keramischen oder mineralischen Untergründen.

Schließlich ist auch die Verwendung des erfindungsgemäßen antibakteriell wirksamen Mittels für die dauerhafte, hoch abriebfeste Imprägnierung von Fasern oder Textilien für die Innenausstattung von Fahrzeugen, insbesondere Bezüge von Fahrzeugsitzen oder Fahrzeugliegen zum Einsatz in Land-, Luft- oder Wasserfahrzeugen, Teppiche, textile Unterbodenverkleidungen und Kofferraumauskleidungen, textile Innenraumverkleidungen wie Dachhimmel, Hutablagen und textile Radlaufschalen sinnvoll und vorteilhaft.

Das erfindungsgemäße antibakteriell wirksames Mittel eignet sich für Anwendungen bei nichttextilen bzw. Nicht-Faseroberflächen wie beispielsweise Metalloberflächen oder ebenen Polymeroberflächen, die insbesondere in Krankenhäusern vorkommen können.

Das antibakteriell wirksame Mittel kann mittels üblichen naßchemischen Verfahren oder durch galvanisches Abscheiden aufgebracht werden, beispielsweise durch ein Tauchverfahren, Sprühverfahren, Rakelverfahren oder durch Pflatschen. Die Trocknung kann mittels ebenfalls üblicher Verfahren wie thermischem Trocknen oder dem Trocknen mittels UV-Bestrahlung erfolgen.

Nachfolgend wird die Erfindung anhand von Ausflihrungsbeispielen erläutert.

### Beispiel 1:

### Stufel:

1,8 g einer 0,1 %igen Chitosanlösung (Deacetylierungsgrad 70%) in 10%iger Ameisensäure werden mit 0,2 g 3-Glycidoxypropyltrimethoxysilan (GLYEO) und 100 g Ethanol versetzt und 12 h gerührt.

### Stufe 2:

Dem Reaktionsgemisch wird zur Weiterverarbeitung für die katalytische Ringöffung des Epoxid-Restes 2,5 bzw. 5 mol% 1-Methylimidazol bezüglich der eingesetzten GLYEO Menge zugesetzt.

### Stufe 3:

Das Gemisch wurde danach mit Wasser im Verhältnis 1/10 (Ein Teil Dispersion in 10 Teilen Wasser) verdünnt und direkt im Foulard-Verfahren auf ein Polyestergestrick aufgetragen. Der Abquetschdruck betrug 4 Bar. Die Trocknung und Aushärtung der Beschichtung erfolgte anschließend innerhalb 4 Minuten bei 150°C im Ofen (Spannrahmen)

Das imprägnierten Gewebe wurde anschließend einem Scheuertest mit einer Nylonbürste bis zu 5000 Zyklen in Anlehnung an ASTM D 2486 unterzogen. Das imprägnierte Gewebe zeigte nach der Beanspruchung keine optische Veränderung oder sichtbaren Verschleiß bzw. Kreidung bei Kratzen der Oberfläche mit dem Fingernagel.

Danach wurde das imprägnierte mit und ohne Scheuerbelastung, das Referenzsystem ohne Imprägnierung einem Waschvorgang bei 40°C unterzogen, um den Abrieb auf der Oberfläche zu entfernen.

Jeweils vor und nach der mechanischen Behandlung des gewaschenen Gewebes wurden die Oberflächen mit verschiedenen Bakterienkulturen beimpft und miteinander verglichen. Das Referenzsystem zeigte keine antibakteriellen Eigenschaften, wobei das imprägnierte Gewebe mechanisch belastet und unbelastet einen deutlichen antibakteriellen Effekt zeigte.

### Beispiel 2:

0,1 Mol 3-Isocyanatopropyltrimethoxysilan (ICTMS) werden in NMP gelöst. Dazu werden 0,01 g Chitosan-Pulver zugegeben und über Nacht gerührt. Danach wird das Gemisch auf 80°C erhitzt und mit 2 Tropfen Dibutylzinndilaurat versetzt und gerührt. Das Reaktionsgemisch wird nach 0,5 h mit 1-Methoxy-2-Propanol, 0,1 g Byk 301 versetzt. Danach erfolgt die Zugabe von 5 Gew.% Aluminiumbutylat und 1 Gew.% Dynasylan F 8800.

Das Gemisch wird daran anschließend auf einen Bodenteppich aus Polyester aufgesprüht, 10 min bei Raumtemperatur abgelüftet und bei 150°C für 5 min getrocknet. Danach wurde die Fleckenresistenz wie folgt getestet: Mit einer Pipette werden 0,2 ml Prüfflüssigkeiten Cola, heiße Schokolade, Fanta und Kaffee auf die Oberfläche in einem Abstand von 10 cm je 2 Tropfen aufgetragen. Nach 24 h wird der Tropfen mit einem Tensid-Wassergemisch abgereinigt. Dazu werden 0,7 ml des Reinigers auf einen mit Wasser getränkten Schwamm (ausgewrungen) aufgebracht. Danach werden die Flecken mit zirkulierender Bewegung des Schwammes ca. 30s unter mäßigem Druck abgereinigt. Dann wird über Nacht getrocknet und beurteilt.
Grad 3: keine sichtbaren Flecken nach der Reinigung;
Grad 2: Verschmutzung partiell sichtbar;
Grad 1: Schmutz sichtbar; kein Unterschied zwischen nicht gereinigter und gereinigter Probe.

Die imprägnierten Gewebe zeigten nach dem Test die Note 3 mit allen Prüfsubstanzen. Ein so imprägniertes Gewebe wurde anschließend kaschiert und als Sitzbezug verarbeitet. Nach Praxisgebrauch in einem Nutzfahrzeug zeigt dieser im Vergleich zum nicht imprägnierten Sitzbezug eine deutlich geringere Anschmutzung und eine wesentlich verringerte Kontamination durch Bakterien und Pilze.

Außerdem wurden die Gewebe zur Beurteilung des antimikrobiellen Effektes mit textiltypischen Bakterienstämmen und einer geringen Menge an Nährstoffen beimpft und nach einer gewissen Inkubationszeit (20-30d) die Lebendkeimzehlen bestimmt und gegenüber der Referenz (unbehandeltes Gewebe verglichen). Dabei zeigt sich eine deutlich geringere Lebendkeimzahl der behandelten Gewebe gegenüber der referenz.

### Beispiel 3:

### Stufe 1:

0,56 g 3-Aminopropyltriethoxysilan (APTES) werden mit 0,56 g 3-Glycidoxypropyltriethoxysilan (GLYEO) und 5 g einer 0,5 %igen Chitosanlösung in 5%iger Essigsäure bei Raumtemperatur über Nacht gerührt.

### Stufe 2:

Zur Weiterverarbeitung des hergestellten Reaktionsgemisches werden 0,37 g Klebosol 30HB25K und 0,01 g Aluminiumacetylacetonat zugesetzt und ca. 6 h gerührt.

### Stufe 3:

Kurz vor der weiteren Verarbeitung werden 10 g des Reaktionsgemisches aus Stufe 2 in 10 g Isopropanol gelöst und mit Ruco 1020 versetzt.

Das Gemisch wurde danach auf ein Polyestergewebe durch Tauchen aufgebracht und anschließend bei 100°C getrocknet. Danach wurde das Gewebe aufkaschiert und als Radlaufschale weiter verarbeitet. Die so hergestellte Radlaufschale zeigt danach eine sehr gute Hydrophobie (Note 9-10) und eine sehr gute Oleophobie.

Ohne die Weiterverarbeitung des Gewebes als Radlaufschale wurde das imprägnierte Gewebe dem ATCC-Test unterzogen, wobei eine Ölnote von 8 (Höchstnote) ermittelt wurde. Nach 10 Wasch- und Trocknungszyklen und einer Reaktivierung durch kurzes Aufbügeln erreichte das Gewebe immer noch eine Ölnote 6-7. Die gewaschenen und ungewaschenen Proben zeigen ebenfalls antibakterielle Eigenschaften.

### Testbedingungen:

Hydrophobie-Note: Test zur Prüfung der wasserabstoßende Eigenschaften 3 Tropfen, 5 cm entfernt voneinander aufbringen. Nach 10 Sekunden Vergabe der Note, wobei zwei von drei Tropfen nicht das Gewebe annetzen oder aufgesogen sein dürfen.

Öl-Note: Test zur Prüfung der ölabstoßenden Eigenschaften 1 Tropfen, 5 cm entfernt aufbringen. Nach 30 Sekunden Vergabe der Note, wobei zwei von drei Tropfen nicht das Gewebe annetzen oder aufgesogen sein dürfen.

| Hydrophobie-Note | | | Oleophobie_Note | |
|---|---|---|---|---|
| Note | Anteil Isopropanol [%] | Anteil dest. Wasser [%] | Note | Prüfflüssigkeit |
| W | 0 | 100 | 1 | Paraffinöl |
| 1 | 10 | 90 | 2 | Paraffinöl/n-Hexadecan |
| 2 | 20 | 80 | 3 | n-Hexadecan |
| 3 | 30 | 70 | 4 | n-Tetradecan |
| 4 | 40 | 60 | 5 | n-Dodecan |
| 5 | 50 | 50 | 6 | n-Decan |
| 6 | 60 | 40 | 7 | n-Octan |
| 7 | 70 | 30 | 8 | n-Heptan |
| 8 | 80 | 20 | | |
| 9 | 90 | 10 | | |
| 10 | 100 | 0 | | |

### Beispiel 4:

1 g 3-Glycidoxypropyltriethoxysilan (GLYEO) werden mit 3 g Ludox HSA, 0,5 g einer 1 %igen Chitosanlösung in 5%iger Essigsäure und 0,1 g Aluminiumacetylacetonat-Lösung (50%ig in 2-Butanol) versetzt und über Nacht bei Raumtemperatur gerührt. Danach wird das Gemisch mit 1% Byk 348 versetzt und mit 10 g Wasser versetzt.

Die Beschitungslösung wurde danach auf ein sorgfaltig von Schmutz-, Öl- und Fettverunreinigungen befreite Edelstahlplatte aufgesprüht. Zur Entfernung von Verschmutzungen und zur Aktivierung der Oberfläche wird die Metallplatte alkalisch mit einem Reiniger vom Typ Alsar 25 NKF gereinigt. Nach dem Reinigen wird mit vollentsalztem Wasser klargespült und getrocknet. Ein Indikator für eine saubere Oberfläche ist die Einstellung einer flächigen Benetzung. Die Härtung erfolgt daran anschließend durch thermische Trocknung des applizierten Naßfilms bei einer Objekttemperatur von 150 °C für 10-15 min gehärtet.

Die beschichtete Oberfläche zeigt nach Belastung der Oberfläche mit einem mit Nivea Creme eingefetteten Finger im Vergleich zu unbehandelten Oberfläche eine deutlich weniger sichtbaren Fingerabdruck. Nach 1 h wird der Fingerabdruck mit einem trockenen Papiertuch abgewischt und zeigt ebenfalls gegenüber der Referenz eine wesentlich bessere rückstandsfreie Abreinigung. Der Fingerabdruck ist nach dem Abreiben auf der unbehandelten Oberfläche immer noch sichtbar.

### Beispiel 5:

2,2 g 3-Isocyanatopropyltriethoxysilan (ICTES) werden in NMP gelöst. Dazu werden 0,2 g Chitosan-Pulver und 1,35 g Polyethylenglycol 600 und gerührt. Danach wird das Gemisch auf 80°C erhitzt und mit 2 Tropfen Dibutylzinndilaurat versetzt und 8 h gerührt und auf Raumtemperatur abgekühlt. Das Reaktionsgemisch wird danach mit 1-Methoxy-2-Propanol, 0,01g Aluminium sec. Butylat und 0,1 g Byk 301 versetzt.

### Beschichtung von Polycarbonat:

Das Gemisch wurde danach auf eine Polycarbonat-Platte durch Tauchen aufgebracht und anschließend bei 130°C getrocknet. Die beschichtete Probescheibe wird flächig im Abstand von 15 cm über einen Topf kochendes Wasser gelegt und 20 sec. beobachtet. Bei diesem Test zeigte sich kein Beschlagen der beschichteten Platten-Seite.

### Beschichtung von Baumwolle.

Das Gemisch wurde danach auf ein Baumwollgewebe durch Tauchen aufgebracht und erst bei Raumtemperatur ca. 1 h und anschließend bei 150°C getrocknet. Das so hergestellte Gewebe zeigt danach eine hydrophile Oberfläche (Hydrophobie-Note: 0).

### Testbedingungen:

Hydrophobie-Note: Test zur Prüfung der wasserabstoßende Eigenschaften 3 Tropfen, 5 cm entfernt voneinander aufbringen. Nach 10 Sekunden Vergabe der Note, wobei zwei von drei Tropfen nicht das Gewebe annetzen oder aufgesogen sein dürfen. Danach wurden auf das Gewebe jeweils 0,05 g Fettfreier Testschmutz bzw. Fetthaltiger in der Probenmitte auf einer Fläche von 5 cm aufgebracht. Danach wird mit einem Gewicht von 1 kg per Hand 100-mal verrieben (Zählen jeweils links1 mal und rechts 1-mal, halbe Drehung). Danach werden die Proben mit einem Staubsauger abgesaugt bis keine weitere Schmutzablösung feststellbar ist. Danach wird eine Tensidlösung (1 g Rei in der Tube/100 ml dest. Wasser) auf die Oberfläche mit einem Baumwolltuch manuell unter leichtem Druck aufgetragen und verrieben auf der abgesaugten Probe bis keine weitere Schmutzablösung mit einem weißen Putztuch feststellbar ist. Die Beurteilung im Vergleich zur Probe ohne Imprägnierung zeigte eine deutlich geringerer Schmutzaufnahme bzw. kaum sichtbarer Restschmutz auf der Gewebeoberfläche. Das nicht imprägnierte Baumwoll-Gewebe zeigte dabei eine deutlich sichtbare Verschmutzung.

## Patentansprüche

1. Verwendung eines antibakteriell wirksamen Mittels als Additiv oder Bindemittel mit antibakteriellen Eigenschaften für Sol-Gel-Systeme, wobei das Mittel aus einem mit Silylgruppen modifizierten Naturstoff besteht, wobei der Naturstoff ein Biopolymer ist, das funktionelle Gruppen enthält, die zu 5-95% mit korrespondierenden organischen funktionellen Gruppen von Organosilanen umgesetzt sind und dadurch teilweise Silylgruppen aufweisen und die Organosilane mit dem Naturstoff über eine organische Seitenkette kovalent gebunden sind, wobei dieses Mittel über den Sol-Gel-Prozeß oder durch direkte Siloxanhärtung in eine beschichtungsfähige Form überführt ist und nach Beschichtung und Härtung durch Siloxanbrücken an ein Substrat angebunden ist.

2. Verwendung gemäß Anspruch 1, **dadurch gekennzeichnet, daß** die Silylgruppen mono-, di- oder trifunktionelle Silylgruppen sind.

3. Verwendung gemäß Anspruch 1, **dadurch gekennzeichnet, daß** der Naturstoff oder der modifizierte Naturstoff ausgewählt ist aus der Gruppe bestehend aus Chitinderivaten, anionisch, nicht ionisch oder kationisch derivatisierten Chitosanen, insbesondere Carboxylierungs-, Succinylierungs-, Alkoxylierungs- oder Quaternierungsprodukte, Carboxymethylchitin (Chitosan), Chitosansalzen, Xylanen bzw. Xylanderivaten, Propolis und deren Wirkstoffen.

4. Verwendung gemäß Anspruch 1, **dadurch gekennzeichnet, daß** die funktionellen Gruppen ausgewählt sind aus der Gruppe bestehend aus -NH₂, -OH, -OR, -R-X (X: Halogenidrest), R-SH, R-SO₃ und R-SH, R-COOH, R-COOR.

5. Verwendung gemäß Anspruch 1, **dadurch gekennzeichnet, daß** die Organosilane mit korrespondierenden organischen funktionellen Gruppen ausgewählt sind aus der Gruppe bestehend aus 3-Aminopropyltriethoxysilan, Aminoethylaminpropyltrimethoxysilan, Aminoethyl-aminopropyltrimethoxysilan, Aminoethylaminopropylsilan, 3-Aminopropyl-trimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyl-dimethoxysilan, N-Cyclohexyl-3-aminopropyl-trimethoxysilan, Benzylaminoethyl-aminopropyltrimethoxysilan, Vinylbenzylamino-ethylaminopropyltrimethoxysilan, Vinyltrimethoxysilan, Vinyltriethoxysilan, Vinyldimethoxymethylsilan, Vinyl-(tris)methoxyethoxy)silan, Vinylmethoxymethyl-silan, Vinyltris(2-methoxyethoxy)silan, Vinyltriacetoxysilan, Chloropropyl-trimethoxy-silan, 3-Glycidoxypropyl-trimethoxy-silan, 3-Glycidoxypropyltriethoxysilan, 3-Glycidoxypropyl-methyldiethoxysilan, Mercaptopropyl-trimethoxysilan, Bis-Triethoxysilylpropyldisulfidosilan, Bis-Triethoxysilyl-propyldisulfidosilan, Bis-Triethoxysilylpropyltetroasulfidosilan, N-Cyclohexyl-aminomethylmethyldieethoxysilan, N-Cyclohexylaminomethyltriethoxysilan, N-Phenylaminomethyltrimethoxysilan, (Methacryloxymethyl)methyldimethoxysilan, Methacryl-oxymethyltrimethoxysilan, (Methacryloxymethyl)methyldiethoxysilan, Methacryloxymethyl-triethoxysilan, 3-Methacryloxypropyltrimethoxysilan, 3-Methacryloxypropyltrimethoxysilan, 3-Methacryloxypropyltriacetoxysilan, (Iso-cyanatomethyl)methyldimethoxysilan, 3-Isocyanatopropyltrimethoxysilan, 3-Isocyanatopropyltriethoxysilan, 3-Tri-methoxysilylmethyl-O-methylcarbamat, N-Dimethoxy-(methyl)silylmethyl-O-methyl-carbamat, 3-(Triethoxysilyl)propylbernsteinsäure-anhydrid, 3-Mercaptopropylmethyldimethoxy-silan und Beta-(3, 4-Epoxycyclohexyl)Ethyltriethoxysilan.

6. Verwendung gemäß Anspruch 1 oder Anspruch 2, **dadurch gekennzeichnet, daß** der Naturstoff durch Umsetzung mit Lösungsmittel, insbesondere Wasser, Alkohole, Ether, Heterocyclen, Acetate, Alkane oder Aromaten, in eine lösliche Form gebracht ist.

7. Verwendung gemäß Anspruch 3, **dadurch gekennzeichnet, daß** bei Verwendung von Chitosan als Naturstoff dieses einen Deacetylierungsgrad von mindestens 40 % aufweist.

8. Verwendung gemäß Anspruch 1, **dadurch gekennzeichnet, daß** dieses zusätzlich bis zu 50 Gew.-% antibakteriell wirkende Verbindungen ausgewählt aus der Gruppe bestehend aus metallischen Verbindungen, insbesondere Silberzeolith, Silbersilikat, Silbersulfonat, Silbermetall, Titanoxid, löslichem Glaspulver mit Metallionen, Eisen-Phthalocyanat, Kupfersulfonat und Zink-Pyrithion, quaternisierten Ammoniumsalzen, insbesondere Didecyldimethylammoniumchlorid, Hexadecylpyridiniumchlorid, Cetyldi-methylbenzylammoniumchlorid und Polyoxyalkyltrialkylammoniumchlorid, Tensiden, insbesondere amphoteren Tensiden, bevorzugt Alkyldi(aminoethyl)glycin, nichtionogenen Tensiden, bevorzugt Glycerinstearat, Guanidinverbindungen, insbesondere 1,1-Hexamethylen-bis-5-(4-chlorphenyl)-biguanid-digluconat und Polyhexa-methylen-biguanidhydrochlorid, Phenolen, insbesondere Biozol, Thymol, Alkylenbisphenol-Natriumsalz, p-Chlor-m-xylenol (PCMX), 5-Chlor-2-(2,4-dichlorphenoxy)-phenol (Triclosan), Anilin (3,4,4-Trichlorcarbanilin), Imidazol (2-(4-Thiazolyl)-benzimidazol und 2-(Thiocyanomethylthio)-benzothiazol (TCMTB), Estern, insbesondere Diethylphthalat und Parabene, Neomycinsulfat und der Komplexierung mit Cyclodextrinen enthält.

9. Verwendung gemäß Anspruch 2, **dadurch gekennzeichnet, daß** die mit Silylgruppen modifizierten Naturstoffe durch Katalysatoren wie Lewissäuren oder Lewisbasen vernetzt sind, insbesondere in Form von Übergangsmetallkomplexen, -salzen oder - partikeln, bevorzugt Mikro- oder Nanopartikeln, wobei bevorzugt wird, daß die Übergangsmetallkomplexe, -salze oder -partikel Titan-, Aluminium-, Zinn- oder Zirkoniumkomplexe sind.

10. Verwendung gemäß Anspruch 9, **dadurch gekennzeichnet, daß** die Silylgruppen mit Metallkomplexen, Metallalkoxiden, insbesondere Metallsilikaten von Titan, Zirkonium und Aluminium, Metalloxid-Partikeln oder -Suspensionen über einen Sol-Gel-Prozess umgesetzt sind, wobei die Partikelgröße der Metalloxidpartikel oder -suspensionen zwischen 2 nm bis 1 µm beträgt.

11. Verwendung gemäß Anspruch 1, **dadurch gekennzeichnet, daß** das Mittel anorganische oder organische Füllstoffe, insbesondere Mikro-, Submikro- oder Nanopartikel, Polytetrafluorethylenpartikel oder Wachse enthält.

12. Verwendung gemäß den Ansprüchen 1 bis 11 auf Textilien, Fasern oder anderen faserbasierten Flächen, Kunststoffen, insbesondere Polymeren, Metallen, Naturstoffen, insbesondere Holz, Stroh, Hanf, Sisal, Leder, auf Kunstleder, Glas, keramischen oder mineralischen Untergründen.

13. Verwendung gemäß Anspruch 1 bis 12 als Additiv oder Bindemittel mit antibakteriellen Eigenschaften für die Anwendungen als Antifingerprintadditiv, Antistatikadditiv, Korrosionsschutzadditiv, Kratzfestschutzadditiv, Zunderschutzbeschichtung, Antifoulingbeschichtung, Antifoulingadditiv für Bootslacke, katalytisch aktive Oberflächen, antistatische Schichten oder hydrophile Schichten mit Antibeschlageffekt, in Pulverlacken, Sol-Gel-Lacken, Polymeren oder Silikonen

14. Verwendung gemäß den Ansprüchen 1 bis 12 für die dauerhafte, hoch abriebfeste Imprägnierung von Fasern oder Textilien für die Innenausstattung von Fahrzeugen, insbesondere Bezüge von Fahrzeugsitzen oder Fahrzeugliegen zum Einsatz in Land-, Luft- oder Wasserfahrzeugen, Teppiche, textile Unterbodenverkleidungen und Kofferraumauskleidungen, textile Innenraum-verkleidungen wie Dachhimmel, Hutablagen und textile Radlaufschalen.

## Claims

1. Use of an antibacterial agent as antibacterial additive or binder for sol-gel systems, said agent consisting of a natural substance modified with silyl groups, the natural substance being a biopolymer containing functional groups of which 5-95 % have reacted with corresponding organic functional groups of organosilanes, thereby partially silylating the natural substance, the organosilanes being bonded covalently with the natural substance via an organic side-chain, this agent being converted into a form suitable for coating purposes by way of the sol-gel process or via direct siloxane curing, and, following the coating and curing process, being bound to a substrate by siloxane bridges.

2. Use according to claim 1, **characterised in that** the silyl groups are mono-, di- or trifunctional silyl groups.

3. Use according to claim 1, **characterised in that** the natural substance or modified natural substance is selected from the group consisting of chitin derivatives, anionically, non-ionically or cationically derivatized chitosans, in particular carboxylation, succinylation, alkoxylation or quarternization products, carboxymethyl chitin (chitosan), chitosan salts, xylanes and/or xylane derivatives, and propolis and its active agents.

4. Use according to claim 1, **characterised in that** the functional groups are selected from the group consisting of -NH₂, -OH, -OR, -R-X (X: halide group), R-SH, R-SO₃, R-COOH and R-COOR.

5. Use according to claim 1, **characterised in that** the organosilanes with corresponding organic functional groups are selected from the group consisting of 3-aminopropyltriethoxysilane, aminoethylaminpropyltrimethoxysilane, aminoethyl-aminopropyltrimethoxysilane, aminoethylaminopropylsilane, 3-aminopropyltrimethoxysilane, N-(2-aminoethyl)-3-aminopropyltrimethoxysilane, N-(2-aminoethyl)-3-aminopropylmethyldimethoxysilane, N-(2-aminoethyl)-3-aminopropylmethyldimethoxysilane, N-cyclohexyl-3-aminopropyl-trimethoxysilane, benzylaminoethyl-aminopropyltrimethoxysilane, vinylbenzylamino-ethylaminopropyltrimethoxysilane, vinyltrimethoxysilane, vinyltriethoxysilane, vinyldimethoxymethylsilane, vinyltris(methoxyethoxy)silane, vinylmethoxymethylsilane, vinyltris(2-methoxyethoxy)silane, vinyltriacetoxysilane, chloropropyltrimethoxysilane, 3-glycidoxypropyltrimethoxysilane, 3-glycidoxypropyltriethoxysilane, 3-glycidoxypropyl-methyldiethoxysilane, mercaptopropyltrimethoxysilane, bis-triethoxysilylpropyldisulfidosilane, bis-triethoxysilyl-propyldisulfidosilane, bis-triethoxysilylpropyltetroasulfidosilane, N-cyclohexyl-aminomethylmethyldiethoxy-silane, N-cyclohexylaminomethyltriethoxysilane, N-phenylaminomethyl-trimethoxysilane, (methacryloxymethyl)methyldimethoxysilane, methacryloxymethyl-trimethoxysilane, (methacryloxymethyl)methyldiethoxysilane, methacryloxymethyl-triethoxysilane, 3-methacryloxypropyltrimethoxysilane, 3-methacryloxypropyl-triacetoxysilane, (isocyanatomethyl)methyldimethoxysilane, 3-isocyanatopropyltrimethoxysilane, 3-isocyanatopropyltriethoxysilane, 3-trimethoxy-silylmethyl-O-methylcarbamate, N-dimethoxy-(methyl)silylmethyl-O-methyl-carbamate, 3-(triethoxysilyl)propylsuccinic anhydride, 3-mercaptopropylmethyldimethoxysilane and beta-(3, 4-epoxycyclohexyl)ethyltriethoxysilane.

6. Use according to claim 1 or 2, **characterised in that** the natural substance is rendered soluble by reaction with a solvent, in particular water, alcohols, ethers, heterocyclics, acetates, alkanes or aromatic compounds.

7. Use according to claim 3, **characterised in that**, where chitosan is used as natural substance, this is deacylated to an extent of at least 40 %.

8. Use according to claim 1, **characterised in that** this additionally contains up to 50 % by weight of antibacterial compounds selected from the group consisting of metallic compounds, in particular silver zeolite, silver silicate and silver sulphonate, silver metal, titanium oxide, soluble glass powder containing metal ions, iron phthalocyanate, copper sulphonate and zinc pyrithion, quaternized ammonium salts, in particular didecyldimethylammonium chloride, hexadecylpyridinium chloride, cetyldimethylbenzylammonium chloride and polyoxyalkyltrialkylammonium chloride, surfactants, in particular amphoteric surfactants, preferably alkyldi(aminoethyl)glycine, nonionic surfactants, preferably glyceryl stearate, guanidine compounds, in particular 1,1-hexamethylene-bis-5-(4-chlorophenyl)biguanide digluconate and polyhexamethylene biguanidine hydrochloride, phenols, in particular biozol, thymol, alkylene bisphenol sodium salt, p-chloro-m-xylenol (PCMX), 5-chloro-2-(2,4-dichlorophenoxy)phenol (Triclosan), aniline (3,4,4-trichlorocarbaniline), imidazole (2-(4-thiazolyl)benzimidazole and 2-(thiocyanomethylthio)benzothiazole (TCMTB), esters, in particular diethyl phthalate and parabens, neomycin sulphate and cyclodextrin complexes.

9. Use according to claim 2, **characterised in that** the silyl-modified natural substances are cross-linked by catalysts such as Lewis acids or Lewis bases, especially in the form of complexes or salts of transition metals, or of transition metal particles, preferably microparticles or nanoparticles, it being particularly preferable if the complexes, salts or particles of transition metals are complexes of titanium, aluminium, tin or zirconium.

10. Use according to claim 9, **characterised in that** the silyl groups are reacted via a sol-gel process with metal complexes, metal alkoxides, in particular metal silicates of titanium, zirconium and aluminium, metal oxide particles or metal oxide suspensions, the particle size of the metal oxide particles or suspensions being between 2 nm and 1 µm.

11. Use according to claim 1, **characterised in that** the agent contains inorganic or organic fillers, in particular micro-, submicro- or nanoparticles, polytetrafluoroethylene particles or waxes.

12. Use according to claims 1 to 11 on textiles, fibres or other flat, fibre-based materials, plastics, in particular polymers, metals, natural substances, in particular wood, straw, hemp, sisal and leather, synthetic leather, glass, ceramic or mineral substrates.

13. Use according to claims 1 to 12 as an antibacterial additive or binder for applications as anti-fingerprint additive, antistatic additive, anti-corrosive additive, antiscratch additive, antiscale coating, anti-fouling coating, anti-fouling additive for boat paints, catalytically active surfaces, antistatic layers or hydrophilic layers with antifogging properties, in powder coatings, sol-gel coatings, polymers or silicones.

14. Use according to claims 1-12 for permanent, highly abrasion-resistant impregnation of fibres or textiles for interior vehicle trim, in particular covers for vehicle seats or couches for use in land vehicles, aircraft or watercraft, carpets, textile undershields and boot liners, interior textile trim such as roof liners and rear shelves, and textile wheel arch liners.

## Revendications

1. Utilisation d'un produit antibactérien comme additif ou comme liant ayant des propriétés antibactériennes pour des systèmes sol-gel, le produit étant composé d'un produit naturel modifié avec des groupes silyle, le produit naturel étant un biopolymère qui contient des groupes fonctionnels ayant réagi de 5 à 95% avec des groupes fonctionnels organiques correspondants d'organosilanes et qui, de ce fait, présentent en partie des groupes silyle, les organosilanes étant liés de manière covalente avec le produit naturel par le biais d'une chaîne latérale organique, le produit étant transformé par le procédé sol-gel ou par un durcissement direct de siloxanes en une forme pouvant être appliquée en revêtement, et lié par des ponts de siloxane à un substrat après l'application et le durcissement.

2. Utilisation selon la revendication 1, **caractérisée en ce que** les groupes silyle sont des groupes silyle mono-, di- ou trifonctionnels.

3. Utilisation selon la revendication 1, **caractérisée en ce que** le produit naturel ou le produit naturel modifié est choisi dans le groupe consistant en les dérivés de la chitine, les chitosanes dérivés anioniquement, non ioniquement ou cationiquement, notamment des produits de carboxylation, de succinylation, d'alkoxylation ou de quaternisation, la carboxyméthyl-chitine (chitosane), les sels de chitosane, les xylanes ou dérivés de xylanes, le propolis ou ses principes actifs.

4. Utilisation selon la revendication 1, **caractérisée en ce que** les groupes fonctionnels sont choisis dans le groupe consistant en -NH₂, -OH, -OR, -R-X (X: reste d'halogénure), R-SH, R-SO₃ et R-SH, R-COOH, R-COOR.

5. Utilisation selon la revendication 1, **caractérisée en ce que** les organosilanes avec des groupes fonctionnels correspondants sont choisis dans le groupe consistant en 3-aminopropyltriéthoxysilane, aminoéthylaminpropyltriméthoxysilane, aminoéthyl-aminopropyltriméthoxysilane, aminoéthyl-aminopropylsilane, 3-aminopropyl-triméthoxysilane, N-(2-aminoéthyl)-3-aminopropyltriméthoxysilane, N-(2-aminoéthyl)-3-aminopropylméthyl-diméthoxysilane, N-(2-aminoéthyl)-3-aminopropylméthyl-diméthoxysilane, N-cyclohexyl-3-aminopropyl-triméthoxysilane, benzylaminoéthyl-aminopropyltriméthoxysilane, vinylbenzylamino-éthylaminopropyltriméthoxysilane, vinyltriméthoxysilane, vinyltriéthoxysilane, vinyl-diméthoxyméthylsilane, vinyl-(tris)méthoxyéthoxysilane, vinylméthoxyméthylsilane, vinyltris(2-méthoxyéthoxy)silane, vinyltriacétoxysilane, chloropropyl-triméthoxysilane, 3-glycidoxypropyl-triméthoxysilane, 3-glycidoxypropyltriéthoxysilane, 3-glycidoxypropyl-méthyldiéthoxysilane, mercaptopropyl-triméthoxysilane, bis-triéthoxysilylpropyldisulfido-silane, bis-triéthoxysilyl-propyldisulfidosilane, bis-triéthoxysilylpropyltétrasulfidosilane, N-cyclohexyl-aminométhylméthyldiéthoxysilane, N-cyclohexylaminométhyltriéthoxysilane, N-phénylaminométhyltriméthoxysilane, (méthacryloxyméthyl)méthyldiméthoxysilane, méthacryl-oxyméthyltriméthoxysilane, (méthacryloxyméthyl)méthyldiéthoxysilane, méthacryloxyméthyl-triéthoxysilane, 3-méthacryloxypropyltriméthoxysilane, 3-méthacryloxypropyltriméthoxysilane, 3-méthacryloxypropyltriacétoxysilane, (iso-cyanatométhyl)-méthyldiméthoxysilane, 3-isocyanatopropyltriméthoxysilane, 3-isocyanatopropyltriéthoxy-silane, 3-tri-méthoxy-silylméthyl-O-méthylcarbamate, N-diméthoxy-(méthyl)silylméthyl-O-méthyl-carbamate, 3-(triéthoxysilyl)propyl d'anhydride succinique, 3-mercaptopropyl-méthyldiméthoxysilane et béta-(3, 4-époxycyclohexyl)éthyltriéthoxysilane.

6. Utilisation selon la revendication 1 ou 2, **caractérisée en ce que** le produit naturel est transformé en une forme soluble par une conversion avec un solvant, notamment de l'eau, des alcools, un éther, des hétérocycles, des acétates, des alcanes ou des composés aromatiques.

7. Utilisation selon la revendication 3, **caractérisée en ce que** lorsque du chitosane est utilisé comme produit naturel, celui-ci présente un degré de désacétylation d'au moins 40 %.

8. Utilisation selon la revendication 1, **caractérisée en ce que** celui-ci contient en outre jusqu'à 50 % en poids de composés ayant des propriétés antibactériennes choisis dans le groupe consistant en des composés métalliques, notamment des zéolithes d'argent, du silicate d'argent, du sulfonate d'argent, de l'argent métallique, de l'oxyde de titane, de la poudre de verre soluble avec des ions métalliques, du phtalocyanate de fer, du sulfonate de cuivre et de la pyrithione de zinc, des sels d'ammonium quaternaires, notamment du chlorure de didécylméthylammonium, du chlorure d'hexadécylpyridinium, du chlorure de cétyldi-méthylbenzylammonium, et du chlorure de olyoxyalkyltrialkylammonium, des tensioactifs, notamment des tensioactifs amphotères, de préférence de l'alkyldi(aminoéthyl)glycine, des tensioactifs non-ionogènes, de préférence du stéarate de glycérine, des composés de guanidine, notamment du digluconate de 1,1-héxaméthylène-bis-5-(4-chlorphényl)-biguanide et de l'hydroxychlorure de polyhéxa-méthylène-biguanide, des phénolènes, notamment du biozole, du thymol, un sel de sodium d'un alkylènebisphénol, du p-chlor-m-xylènol (PCMX), du 5-chlor-2-(2,4-dichlorphénoxy)-phénol (Triclosan), de l'aniline (3,4,4-trichlorcarbaniline), de l'imidazole (2-(4-thiazolyl)-benzimidazole et 2-(thiocyanométhylthio)-benzothiazole (TCMTB), des esters, notamment du diéthylphthalate et des parabènes, du sulfate de néomycine et de la complexation avec des cyclodextrines.

9. Utilisation selon la revendication 2, **caractérisée en ce que** les produits naturels modifiés avec des groupes silyle sont réticulés par des catalyseurs tels que des acides de Lewis ou des bases de Lewis, notamment sous la forme de complexes, sels ou particules de métaux de transition, de préférence de micro ou nano particules, les complexes, sels ou particules de métaux de transition étant de préférence des complexes de titane, d'aluminium, d'étain ou de zirconium.

10. Utilisation selon la revendication 9, **caractérisée en ce que** les groupes silyle sont transformés via un procédé sol-gel avec des complexes métalliques, des oxydes métalliques, notamment des silicates métalliques de titane, zirconium et aluminium, des particules ou suspensions d'oxyde métallique, la taille des particules des particules ou suspensions d'oxyde métallique étant comprise entre 2 nm et 1 µm.

11. Utilisation selon la revendication 1, **caractérisée en ce que** le produit comprend des matières de remplissage minérales ou organiques, notamment des microparticules, submicroparticules ou nanoparticules, des particules de polytétrafluoréthylène ou des cires.

12. Utilisation selon les revendications 1 à 11 sur des textiles, des fibres ou d'autres surfaces à base de fibres, des matières plastiques, notamment des polymères, des métaux, des matières naturelles, notamment du bois, de la paille, du chanvre, du sisal, du cuir, du cuir synthétique, du verre, des supports céramiques ou minéraux.

13. Utilisation selon la revendication 1 à 12 comme additif ou comme liant ayant des propriétés antibactériennes pour l'utilisation comme additif anti-empreintes digitales, additif antistatique, additif de protection contre la corrosion, additif de protection contre les rayures, revêtement de protection contre l'amadou, revêtement antifouling, additif antifouling pour les peintures destinées aux bateaux, surfaces catalytiquement actives, couches antistatiques ou couches hydrophiles avec effet antibuée, dans des peintures en poudre, des peintures sol-gel, des polymères ou des silicones.

14. Utilisation selon les revendications 1 à 12 pour l'imprégnation durable et hautement résistante à l'abrasion de fibres ou de textiles pour l'aménagement intérieur de véhicules, notamment des revêtements de sièges de véhicule ou de couchettes de véhicule pour l'application dans des véhicules terrestres, aéronautiques ou maritimes, des tapis, des habillages textiles de bas de caisse et des habillage de coffre, des habillages d'espaces intérieurs tels que des garnitures de toit, des plages arrières et des passages de roue textiles.
